# EUROPÄISCHE PATENTANMELDUNG

(11) **EP 1 213 505 A1**
(43) Veröffentlichungstag der Anmeldung: **12.06.2002**
(21) Anmeldenummer: 01250420.5
(22) Anmeldetag: 30.11.2001
(51) Int. Cl.: F16G 11/00

(54) **Vorrichtung zum Befestigen eines Seilendes an einer Platte**

(30) Priorität: 05.12.2000 DE 10061344
(71) Anmelder: Demag Cranes & Components GmbH, 58300 Wetter (DE)
(72) Erfinder: Nerger, Klaus, Dipl.-Ing., 47506 Neukirchen-Vluyn (DE)
(74) Vertreter: Meissner, Peter E., Dipl.-Ing.

(57) **Zusammenfassung**

Die Erfindung betrifft eine Vorrichtung zum lösbaren Befestigen eines Seilendes an einer Platte. Um eine Vorrichtung zu schaffen, die große Seilkräfte aufnehmen kann und trotzdem mit geringem Aufwand montierbar ist, wird vorgeschlagen, dass eine an der Platte (1) ausgebildete Lasche (3) und zwei Greifplatten (2) vorgesehen sind, die jeweils mit zumindest einer quer zur Greifplatte (2) verlaufenden ersten Aufstecköffnung (5) und mit zumindest einem Greifelement (7) versehen sind, dass die beiden Greifplatten (2) mit einander zugewandten Flachseiten auf die Lasche (3) aufsteckbar und von der Lasche (3) geführt gegenläufig zueinander in eine Greifstellung bewegbar sind, dass jede Greifplatte (2) zumindest eine Durchgangsöffnung (6) aufweist, dass in der Greifstellung mittels der Greifelemente (7) eine formschlüssige Verbindung mit der Platte (1) herstellbar ist und dass die Durchgangsöffnungen (6) beider Greifplatten (2) zueinander fluchtend verlaufen, so dass ein bolzenartiges Element durch die Durchgangsöffnungen (6) zur Plattenfixierung durchsteckbar ist.

## Beschreibung

Die Erfindung betrifft eine Vorrichtung zum lösbaren Befestigen eines Seilendes an einer Platte, insbesondere einer Anschlussplatte eines Hubbalkens, gemäß dem Oberbegriff des Anspruchs 1.

Es ist allgemein bekannt, ein Seilende dadurch an einer Platte zu befestigen, indem das Seilende durch eine Durchgangsöffnung der Platte hindurchgeführt und anschließend verknotet wird.

Eine andere bekannte Möglichkeit besteht darin, das Seil in einer Seiltasche mit einem Seilkeil enden zu lassen und die Seiltasche an der Platte zu befestigen.

Die bekannten Seilbefestigungen haben den Nachteil, dass die Platten oder eine Tragkonstruktion mit plattenförmigem Element mit einer aufgeschweißten Rippe zu versehen, die eine Bohrung zur Aufnahme der Seiltasche aufweist.

Die Aufgabe der Erfindung besteht darin, die Vorrichtung zum lösbaren Befestigen eines Seilendes an einer Platte vorzuschlagen, die große Seilkräfte aufnehmen kann und trotzdem mit geringem Aufwand montierbar ist.

Die Lösung dieser Aufgabe ist durch die im Anspruch 1 angegebenen Merkmale gegeben. Durch die kennzeichnenden Merkmale der Unteransprüche ist die Vorrichtung in vorteilhafter Weise weiter ausgestaltet.

Die Lösung sieht vor, dass eine an der Platte ausgebildete Lasche und zwei Greifplatten vorgesehen sind, die jeweils mit zumindest einer quer zur Greifplatte verlaufenden ersten Aufstecköffnung und mit zumindest einem Greifelement versehen sind, dass die Aufstecköffnungen zum Laschenquerschnitt korrespondieren, wobei die beiden Greifplatten mit einander zugewandten Flachseiten auf die Lasche aufsteckbar und von der Lasche geführt gegenläufig zueinander in eine Greifstellung bewegbar sind, dass jede Greifplatte zumindest eine quer zur Greifplatte verlaufende Durchgangsöffnung aufweist, dass in der Greifstellung mittels der Greifelemente eine formschlüssige Verbindung mit der Platte herstellbar ist und die Durchgangsöffnungen beider Greifplatten zueinander fluchtend verlaufen, so dass ein bolzenartiges Element durch die Durchgangsöffnungen durchsteckbar ist, welches die Greifplatten in der Greifstellung fixiert und zur Befestigung des Seilendes dient. Die Verwendung zweier beispielsweise mittels des Laserschneidverfahrens hergestellter Greifplatten hat den Vorteil, dass das Seilende mit geringem Aufwand bei hoher Seilbelastbarkeit sicher an der Platte befestigbar ist, also ohne Schweißen, nur durch Ineinanderstecken einfacher Blechteile. Die Befestigung lässt sich nach Entfernen des bolzenartigen Elements mit wenigen Handgriffen wieder lösen. Das hat den weiteren Vorteil, dass auch die Platte jederzeit mit geringem Aufwand schnell ausgetauscht werden kann.

Bei einer konstruktiv einfachen Ausführung weisen die Greifelemente voneinander abgewandte Haken auf, welche die Platte in der Greifstellung unterfassen.

Die Lasche wird konstruktiv einfach durch zwei parallele schlitzförmige Ausnehmungen gebildet.

Herstellungstechnisch einfach ist es, wenn die Greifplatten identisch ausgebildet sind und um 180° versetzt zueinander auf die Lasche aufgesteckt werden.

Um die Greifplatten in Aufsteckrichtung zu sichern, wird vorgeschlagen, dass die Lasche zusätzliche Ausnehmungen aufweist, die eine Verschiebung der Greifplatten in die Greifstellung ermöglichen und gleichzeitig die Greifplatten fixieren.

Eine sehr belastbare und sichere Befestigung des Seilendes ist gegeben, wenn diese mittels einer am bolzenartigen Element befestigbaren Seiltasche mit Seilkeil erfolgt.

Ein Ausführungsbeispiel der Erfindung ist in der Zeichnung dargestellt und wird nachfolgend näher beschrieben. Es zeigen:
- Fig. 1: eine Platte mit einer Lasche und zwei Greifplatten vor dem Aufstecken,
- Fig. 1a: eine Platte gemäß Fig. 1 mit einem Vorsprung,
- Fig. 2: eine Platte gemäß Fig. 1 mit aufgesteckten Greifplatten,
- Fig. 3: die Platte gemäß Fig. 1 mit den beiden aufgesteckten Greifplatten in der Greifstellung,
- Fig. 4: die Greifplatten in der Greifstellung gemäß Fig. 3 ohne die Platte und
- Fig. 5: eine Seilbefestigung an einer Platte mit zwei Greifplatten gemäß Fig. 1 und einer Seiltasche mit Seilkeil für das Seilende.

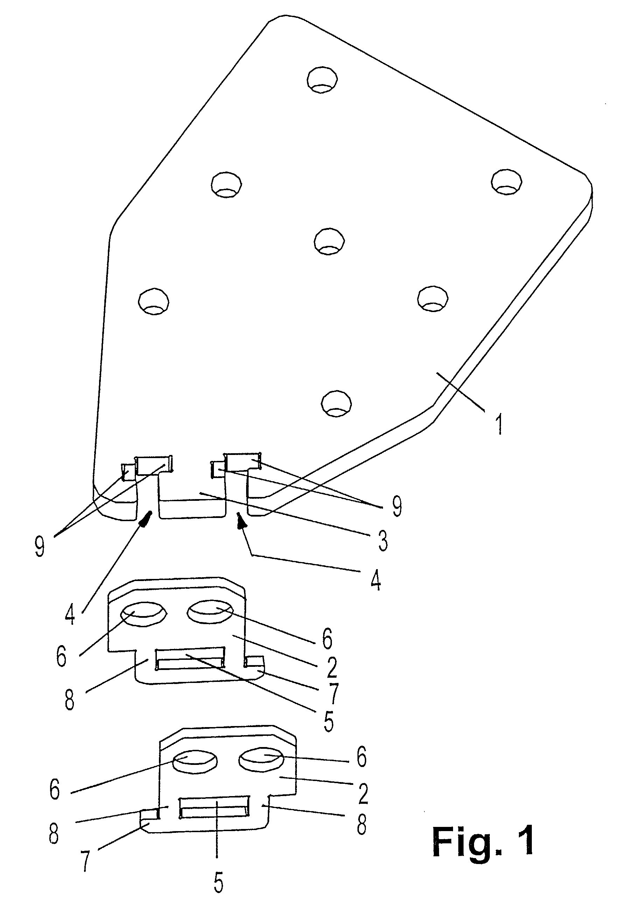

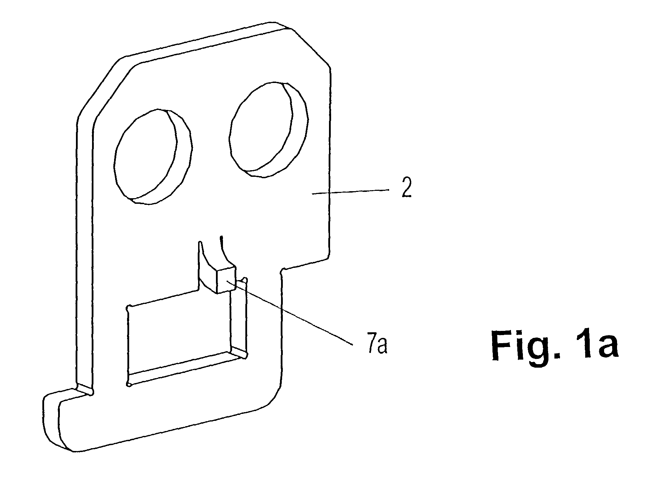

Fig. 1 zeigt eine Platte 1, beispielsweise eine Anschlussplatte für einen Hubbalken einer Hubachse (nicht gezeigt), sowie zwei Greifplatten 2. Die Platte 1 weist eine Lasche 3 auf, die zwischen zwei seitlichen Schlitzen 4 angeordnet ist. Korrespondierend zum rechteckigen Querschnitt der Lasche 3 sind die beiden Greifplatten 2 jeweils mit einer quer zur Greifplatte 2 verlaufenden Aufstecköffnung 5 versehen. Die Greifplatten 2 weisen weiter jeweils zwei Durchgangsöffnungen 6 auf, die parallel zu den Aufstecköffnungen 5 verlaufen. Auf einer Seite verfügen beide Greifplatten 2 über ein Greifelement 7 in Form eines Hakens.

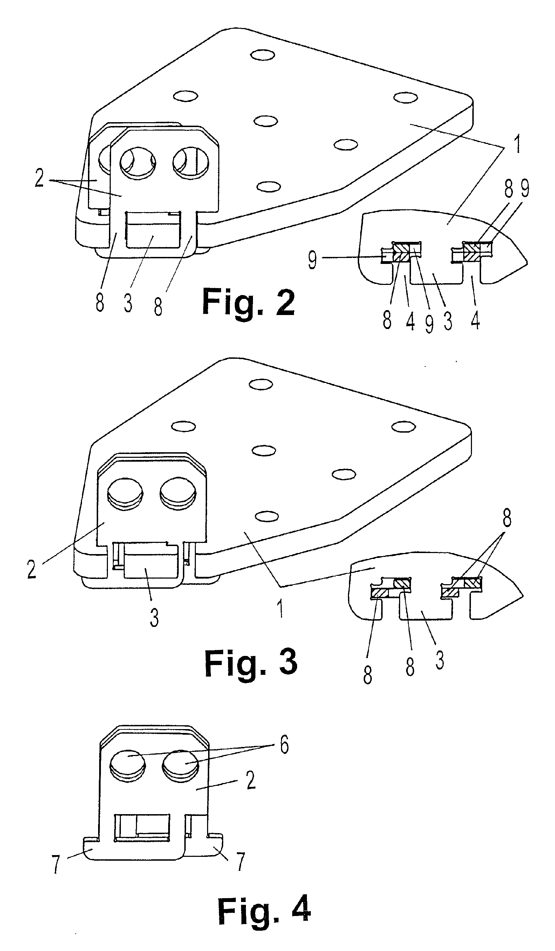

Fig. 2 zeigt die aufgesteckten Greifplatten 2 nach dem Aufstecken auf die Lasche 3, wobei erkennbar ist, dass die Breite von zwei Stegen 8, die durch die Aufstecköffnung 5 gebildet werden, in etwa der Breite der Schlitze 4 entsprechen. Während die Aufstecköffnungen 5 nach dem Aufstecken fluchten, sind die beiden Durchgangsöffnungen 6 der Greifplatten 2 jeweils gegeneinander verschoben. Rechts zeigt Fig. 2 in einem Ausschnitt mit in der Plattenebene liegender Schnittebene die Lage der Stege 8 bei vollständig aufgesteckten Greifplatten 2.

Die Greifplatten 2 sind, wie die Fig. 1 und 2 zeigen, identisch ausgebildet und werden um 180° versetzt zueinander auf die Lasche 3 aufgesteckt. Zusätzlich können die Greifplatten 2, wie in Fig. 1a gezeigt ist, auf einer Plattenseite mit einer vorsprungartigen Nase 7a versehen sein, die jeweils sicherstellt, dass die Greifplatten 2 nicht falsch herum aufgesteckt werden.

Von der Lasche 3 geführt sind die beiden Greifplatten 2 jeweils in entgegengesetzter Richtung verschiebbar. Dies wird durch in der Lasche 3 quer zu den Schlitzen 4 ausgebildeten schlitzförmigen Ausnehmungen 9 ermöglicht (s. auch Fig. 1).

Fig. 3 zeigt die beiden Greifplatten 2 gegenläufig zu einander verschoben in der Greifstellung. In dieser Stellung unterfassen die beiden voneinander abgewandten Haken (Greifelemente 7) die Platte 1. Fig. 4 zeigt die beiden in der Greifstellung befindlichen Greifplatten 2 ohne die Platte 1. Selbstverständlich sind die Haken nur eine Ausführung für die Greifelemente 7. Bei diesen kann es sich auch um Nuten zur formschlüssigen Aufnahme der Platte 1 oder eine ähnliche Ausführung mit Formschluss handeln.

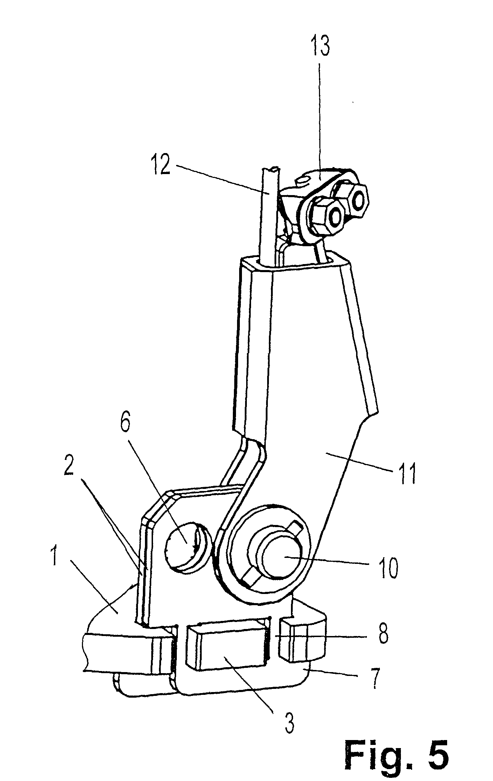

In Fig. 5 ist eine Befestigung für eine Seilende gezeigt, bei der mittels zweiter Greifplatten 2 eine Verbindung zur Platte 1 hergestellt ist. Durch zwei der beiden fluchtenden Durchgangsöffnungen 6 ist ein Bolzen 10 hindurchgesteckt, an dem sich wiederum eine Seiltasche 11 für ein Seil 12 schwenkbar abstützt. Das Seilende ist mittels einer Seilklemme 13 gesichert.

### Bezugszeichenliste:

- 1: Platte
- 2: Greifplatte
- 3: Lasche
- 4: Schlitz
- 5: Aufstecköffnung
- 6: Durchgangsöffnung
- 7: Greifelement
- 7a: Nase
- 8: Steg
- 9: Ausnehmung
- 10: Bolzen
- 11: Seiltasche mit Seilkeil
- 12: Seil
- 13: Seilklemme

## Patentansprüche

1. Vorrichtung zum lösbaren Befestigen eines Seilendes an einer Platte, insbesondere an einer Anschlussplatte für einen Hubbalken einer Hubachse,
**dadurch gekennzeichnet,**
**dass** eine an der Platte (1) ausgebildete Lasche (3) und
zwei Greifplatten (2) vorgesehen sind, die jeweils mit zumindest einer quer zur Greifplatte (2) verlaufenden ersten Aufstecköffnung (5) und mit zumindest einem Greifelement (7) versehen sind,
**dass** die Aufstecköffnungen (5) zum Laschenquerschnitt korrespondieren, wobei die beiden Greifplatten (2) mit einander zugewandten Flachseiten auf die Lasche (3) aufsteckbar und von der Lasche (3) geführt gegenläufig zueinander in eine Greifstellung bewegbar sind,
**dass** jede Greifplatte (2) zumindest eine quer zur Greifplatte (2) verlaufende Durchgangsöffnung (6) aufweist,
**dass** in der Greifstellung mittels der Greifelemente (7) eine formschlüssige Verbindung mit der Platte (1) herstellbar ist und die Durchgangsöffnungen (6) beider Greifplatten (2) zueinander fluchtend verlaufen, so dass ein bolzenartiges Element durch die Durchgangsöffnungen (6) durchsteckbar ist, welches die Greifplatten (2) in der Greifstellung fixiert und zur Befestigung des Seilendes dient.

2. Vorrichtung nach Anspruch 1,
**dadurch gekennzeichnet,**
**dass** die Greifelemente (7) als voneinander abgewandte Haken ausgebildet sind, welche die Platte (1) in der Greifstellung unterfassen.

3. Vorrichtung nach einem der vorhergehenden Ansprüche,
**dadurch gekennzeichnet,**
**dass** die Lasche (3) durch zwei parallele schlitzförmige Ausnehmungen (9) gebildet ist.

4. Vorrichtung nach einem der vorhergehenden Ansprüche,
**dadurch gekennzeichnet,**
**dass** die identischen Greifplatten (2) um 180 Grad versetzt zueinander aufgesteckt sind.

5. Vorrichtung nach einem der vorhergehenden Ansprüche,
**dadurch gekennzeichnet,**
**dass** die Lasche (3) zusätzliche Ausnehmungen (9) aufweist, die eine Verschiebung der Greifplatten (2) in die Greifstellung ermöglichen und gleichzeitig die Greifplatten (2) fixieren.

6. Vorrichtung nach einem der vorhergehenden Ansprüche,
**dadurch gekennzeichnet,**
**dass** die Befestigung des Seilendes mittels einer am bolzenartigen Element befestigbaren Seiltasche (11) erfolgt.
